# EUROPÄISCHE PATENTANMELDUNG

(11) **EP 2 239 681 A1**
(43) Veröffentlichungstag der Anmeldung: **13.10.2010**
(21) Anmeldenummer: 09005090.7
(22) Anmeldetag: 07.04.2009
(51) Int. Cl.: G06K 7/00

(54) **Manipulationssicherer Kartenleser**

(71) Anmelder: ddm hopt + schuler GmbH & Co. KG., 78628 Rottweil (DE)
(72) Erfinder: Hopt, Karl-Rudolf, 78628 Rottweil (DE); Storz, Michael, 78073 Bad Dürrheim (DE)
(74) Vertreter: Kohler Schmid Möbus

(57) **Zusammenfassung**

Bei einem Kartenleser (1) mit einer Kontaktiereinheit (7) zum Datenaustausch mit einer in den Kartenleser (1) eingeführten Chipkarte (2) ist erfindungsgemäß vorgesehen, dass die Kontaktiereinheit (7) innerhalb einer Bohrschutzhaube (5) quer zur Kartenbahn einer eingeführten Chipkarte (2) in Absenkführungen (10) verschiebbar geführt ist, dass eine zur Kartenbahn hin offene Bodenöffnung (14) der Bohrschutzhaube (5) mittels eines Bohrschutz-Abdeckschiebers (15) verschließbar ist, der in Karteneinführrichtung (3) verschiebbar geführt ist und von einer eingeführten Chipkarte (2) in Karteneinführrichtung (3) bis zur Freigabe der Bodenöffnung (14) mitgenommen wird, dass die Kontaktiereinheit (7) mit dem Abdeckschieber (15) derart bewegungsgekoppelt ist, dass durch Verschieben des Abdeckschiebers (15) in Karteneinführrichtung (3) die Kontaktiereinheit (7) durch die freigegebene Bodenöffnung (14) hindurch bis auf die Chipkarte (2) abgesenkt wird, und dass die Bohrschutzhaube (5) und der Abdeckschieber (15) vollflächig jeweils mindestens eine durchgehende Leiterbahnstruktur aufweisen, die an eine Überwachungseinrichtung angeschlossen bzw. anschließbar ist.

## Beschreibung

Die vorliegende Erfindung betrifft einen Kartenleser, insbesondere Chipkartenleser, mit einer Kontaktiereinheit zum Datenaustausch mit einer in den Kartenleser eingeführten Chipkarte.

Bei bekannten Kartenlesern dieser Art kann der Datenaustausch mit einer Chipkarte durch Kontaktieren der elektrischen Kontakte der Kontaktiereinheit manipuliert werden.

Die Aufgabe der vorliegenden Erfindung ist es, einen Kartenleser der eingangs genannten Art vor solchen Manipulationen zu schützen, d.h. einen "sicheren Kartenleser" bereitzustellen.

Diese Aufgabe wird erfindungsgemäß dadurch gelöst, dass die Kontaktiereinheit innerhalb einer Bohrschutzhaube quer zur Kartenbahn einer eingeführten Chipkarte in Absenkführungen verschiebbar geführt ist, dass eine zur Kartenbahn hin offene Bodenöffnung der Bohrschutzhaube mittels eines Bohrschutz-Abdeckschiebers verschließbar ist, der in Karteneinführrichtung verschiebbar geführt ist und von einer eingeführten Chipkarte in Karteneinführrichtung bis zur Freigabe der Bodenöffnung mitgenommen wird, dass die Kontaktiereinheit mit dem Abdeckschieber derart bewegungsgekoppelt ist, dass durch Verschieben des Abdeckschiebers in Karteneinführrichtung die Kontaktiereinheit durch die freigegebene Bodenöffnung hindurch bis auf die Chipkarte abgesenkt wird, und dass die Bohrschutzhaube und der Abdeckschieber vollflächig jeweils mindestens eine durchgehende Leiterbahnstruktur aufweisen, die an eine Überwachungseinrichtung angeschlossen bzw. anschließbar ist.

Erfindungsgemäß ist bei geschlossenem Abdeckschieber die Kontaktiereinheit vollständig von einem in sich geschlossenen Bohrschutzgehäuse umgeben. Durch Einführen der Chipkarte wird der Abdeckschieber in Einführrichtung aufgeschoben, wodurch die Bodenöffnung der Bohrschutzhaube freigeben wird und die Kontaktiereinheit durch die nun freigegebene Bodenöffnung hindurch auf die Kontaktfelder der Chipkarte für einen Datenaustausch abgesenkt werden kann.

Werden die Bohrschutzhaube oder der Abdeckschieber entfernt oder z.B. durch Bohren zerstört, wird die durchgehende Leiterbahnstruktur, über die im Betrieb ein Strom fließt, durchtrennt. Dies wird von einer Steuer- oder Überwachungseinheit erkannt, die dann keinen Lesevorgang mehr zulässt bzw. die Kontaktiereinheit außer Funktion setzt. Eine unbemerkte Manipulation an der Kontaktiereinheit ist somit nicht möglich.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: den erfindungsgemäßen Kartenleser mit einer auf eine Chipkarte absenkbaren Kontaktiereinheit, wobei die gezeigte Chipkarte noch nicht vollständig in den Kartenleser eingeführt ist und eine Leiterplatte abgenommen ist;
- Fign. 2a, 2b: den Kartenleser in einer Schnittansicht gemäß II-II in Fig. 1 mit abgenommener Leiterplatte (Fig. 2a) und mit montierter Leiterplatte (Fig. 2b);
- Fig. 3: eine Seitenansicht der Kontaktiereinheit in ihrer nicht abgesenkten Ausgangsposition;

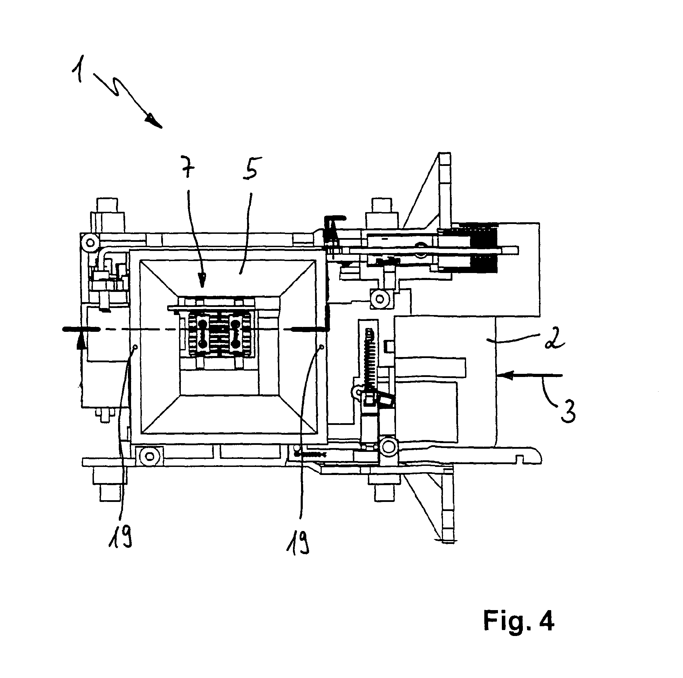

- Fig. 4: den Kartenleser mit der auf die nun vollständig eingeführte Chipkarte abgesenkten Kontaktiereinheit in einer Ansicht analog zu Fig. 1;

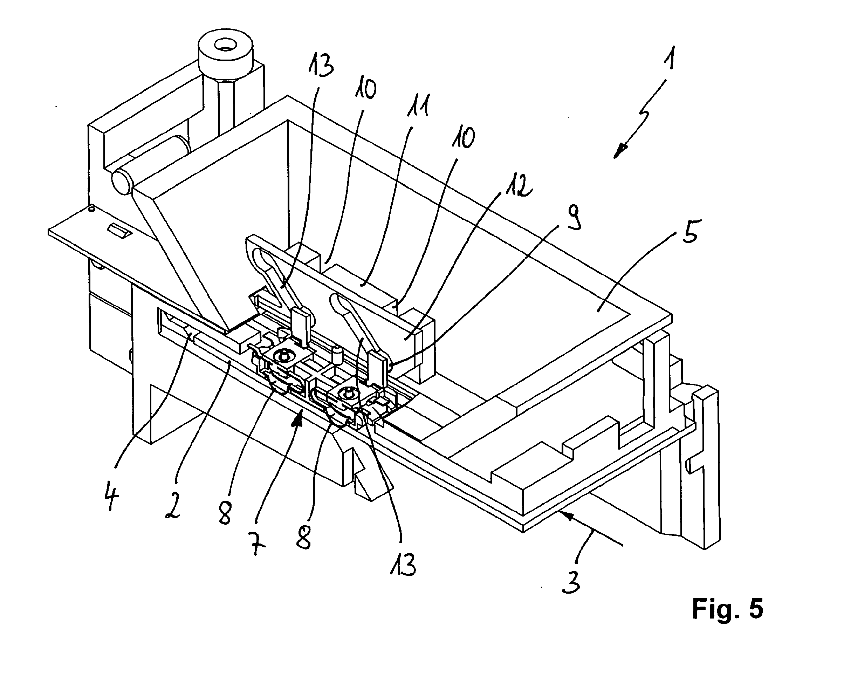

- Fig. 5: den Kartenleser mit der auf die Chipkarte abgesenkten Kontaktiereinheit in einer Schnittansicht analog zu Fig. 2; und

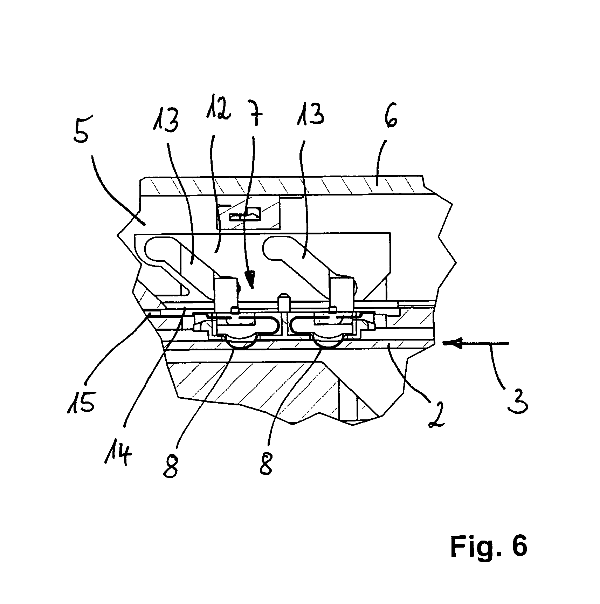

- Fig. 6: die Kontaktiereinheit in ihrer auf die Chipkarte abgesenkten Kontaktierposition in einer Seitenansicht analog zu Fig. 3.

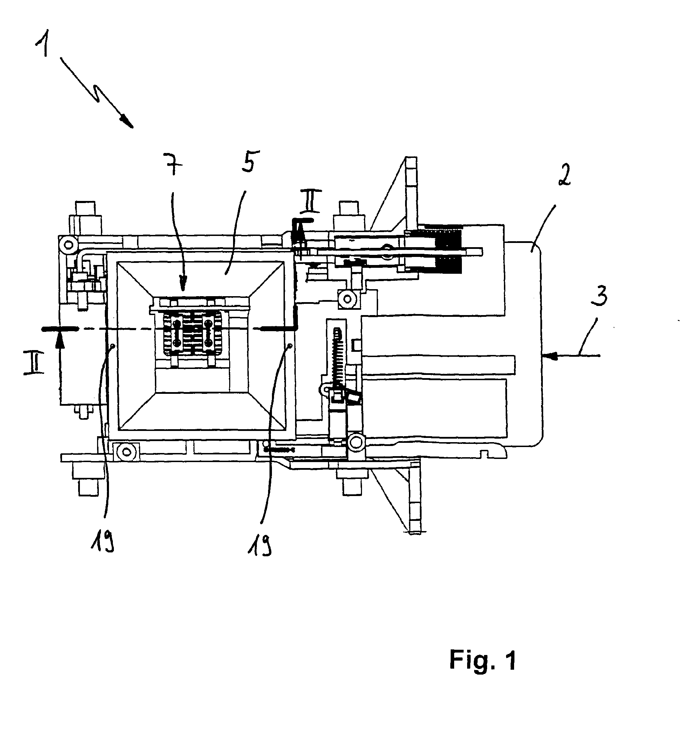

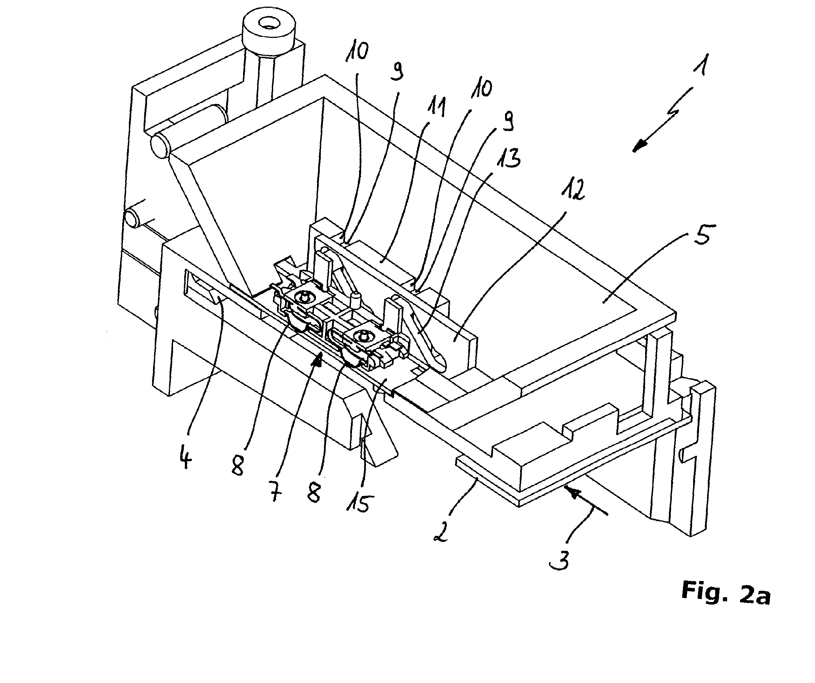

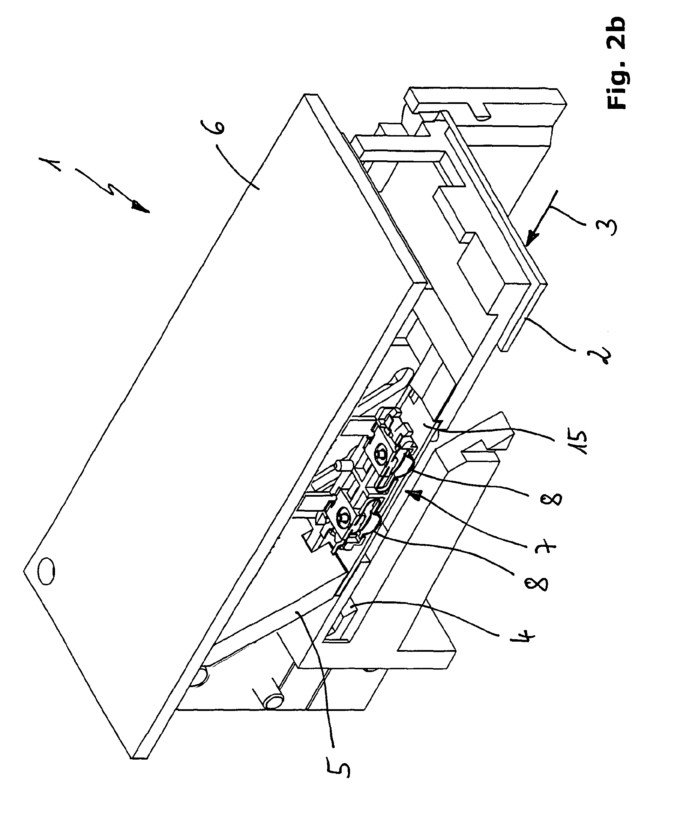

Der in **Fig. 1** gezeigte Kartenleser **1** ist ein so genannter Push/Pull-Kartenleser, bei dem eine Chipkarte **2** durch den Benutzer in Einführrichtung **3** bis zur Anlage an einen Kartenanschlag **4** (Fig. 2) in ihre Datenaustauschposition in den Kartenleser 1 eingeführt und nach dem Datenaustausch vom Benutzer wieder aus dem Kartenleser 1 herausgezogen wird. Die Chipkarte 2 trägt zum Speichern der Daten einen Mikrochip (nicht gezeigt), dessen Kontakte als elektrische Kontaktfelder (nicht gezeigt) auf der Kartenoberfläche vorgesehen sind.

Der Kartenleser 1 weist eine Bohrschutzhaube **5** auf, die mit ihrer offenen Deckelseite an einer Leiterplatte **6** (Fig.2b) montiert ist. Innerhalb der Bohrschutzhaube 5 ist eine Chip-Kontaktiereinheit **7** mit zwei in Karteneinführrichtung 3 hintereinander angeordneten Reihen mit jeweils vier elastisch verformbaren Kontaktfedern **8** vorgesehen, um die elektrischen Kontaktfelder der in den Kartenleser 1 eingeführten Chipkarte 2 zu kontaktieren. Die Kontaktiereinheit 7 weist an ihren beiden Seiten, von denen in der Schnittansicht der **Fign. 2a** **und** **2b** nur eine gezeigt ist, jeweils zwei Führungszapfen **9** auf, die in rechtwinklig zur Kartenbahn verlaufenden Absenkführungen **10** einer Innenwand **11** der Bohrschutzhaube 5 verschiebbar geführt sind. Die Absenkbewegung der Kontaktiereinheit 7 wird mittels eines Steuer- oder Kulissenschiebers **12** gesteuert, der in Karteneinführrichtung 3 gegen die Wirkung einer Rückstellkraft bzw. -feder (nicht gezeigt) verschiebbar geführt ist. Der Kulissenschieber 12 weist zwei bzgl. der Kartenbahn und den Absenkführungen 10 schräg verlaufende Kulissenführungen **13** auf, die sich - gesehen in Karteneinführrichtung 3 - von einer kartenbahnnahen Führungsposition in eine kartenbahnferne Führungsposition erstrecken. Der Kulissenschieber 12 ist zwischen der Kontaktiereinheit 7 und der Innenwand 11 angeordnet, so dass die Führungszapfen 9 erst durch die Kulissenführungen 13 hindurch- und dann in die Absenkführungen 10 eingreifen. Auf der in Fign. 2a und 2b nicht gezeigten Seite greift die Kontaktiereinheit 7 ebenfalls mit zwei Führungszapfen durch die Kulissenführungen eines Kulissenschiebers hindurch und in Absenkführungen einer Innenwand der Bohrschutzhaube 5 ein.

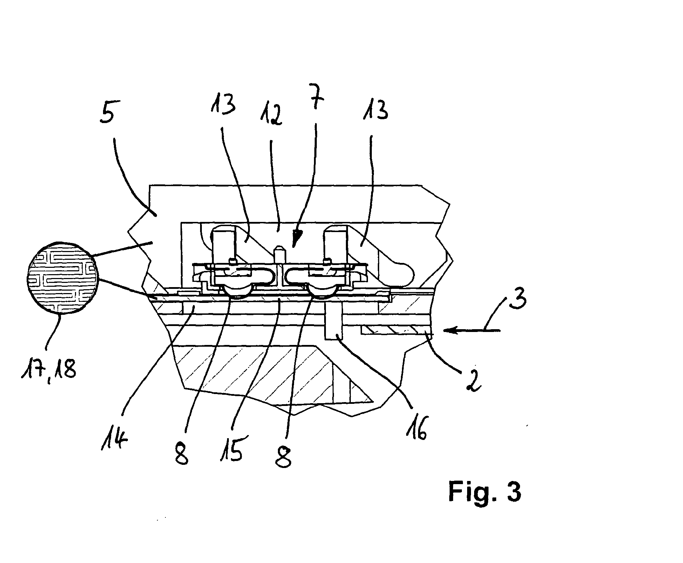

Die der Leiterplatte 6 gegenüberliegende Bodenöffnung **14** (Fig. 3) der Bohrschutzhaube 5 ist mit einem Bohrschutz-Abdeckschieber **15** verschlossen, der zwischen der Kontaktiereinheit 7 und der Kartenbahn angeordnet und in Karteneinführrichtung 3 gegen die Wirkung einer Rückstellkraft bzw. -feder (nicht gezeigt) in der Bohrschutzhaube 5 verschiebbar geführt ist. Wie in **Fig. 3** gezeigt, greift der Abdeckschieber 15 mit zwei zapfenförmigen Mitnehmern **16** in die Kartenbahn ein und wird somit von einer eingeführten Chipkarte 2 in Karteneinführrichtung 3 mitgenommen. Der Abdeckschieber 15 hintergreift mit Mitnehmervorsprüngen (nicht gezeigt) in Karteneinführrichtung 3 die beiden Kulissenschieber 12, die somit vom Abdeckschieber 15 in Karteneinführrichtung 3 mitgenommen werden.

In der in Fign. 2a und 2b gezeigten geschlossenen Ausgangsposition des Kartenlesers 1 ist sowohl die Kontaktiereinheit 7 mit ihren Kontaktfedern 8 gegenüber der Kartenbahn einer einzuführenden Chipkarte 2 angehoben als auch die Bodenöffnung 14 der Bohrschutzhaube 5 durch den Abdeckschieber 15 verschlossen.

Die Bohrschutzhaube 5 und der Abdeckschieber 15 sind Kunststoffteile, deren Innenseiten jeweils eine metallisierte Mäander-Leiterbahnstruktur **17, 18** als Bohrschutz aufweisen. Dazu wurde auf die Innenseite dieser Kunststoffteile vollflächig, d.h. flächendeckend auf ihrer gesamten Fläche, mit einem Laser eine Mäanderstruktur im Abstand von 0,18 mm abgetragen. Nach dieser Laserstrukturierung wurden die Kunststoffteile metallisiert. Durch die metallisierte Mäanderstruktur ist auf der gesamten Innenseite zwischen zwei Kontaktflächen oder -punkten (Lötpads) eine durchgehende elektrische Leiterbahn gelegt, die beim Durchbohren oder Abschleifen des Kunststoffteils zerstört und damit unterbrochen wird. Die beiden Kontaktflächen der Bohrschutz-Leiterbahnstruktur 17 der Bohrschutzhaube 5 sind in Fig. 1 mit 19 bezeichnet und stellen so einen elektrischen Kontakt mit der darauf montierten Leiterplatte 6 her. Die beiden Kontaktflächen der Bohrschutz-Leiterbahnstruktur 18 des Abdeckschiebers 15 sind über Kabel bzw. Flexleitung (nicht gezeigt) ebenfalls an die montierten Leiterplatte 6 angeschlossen, die ihrerseits auch eine Bohrschutz-Leiterbahnstruktur aufweist. In der geschlossenen Ausgangsposition des Kartenlesers 1 ist die Kontaktiereinheit 7 somit vollständig von einem in sich geschlossenen Bohrschutzgehäuse umgeben.

Wenn die Bohrschutzhaube 5, die Leiterplatte 6 oder der Abdeckschieber 15 entfernt oder z.B. durch Bohren zerstört werden, wird die durchgehende Leiterbahn, über die im Betrieb ein Strom fließt, durchtrennt. Dies wird von einer z.B. auf der Leiterplatte 6 angeordneten externen Steuer- oder Überwachungseinheit (nicht gezeigt) erkannt, die dann keinen Lesevorgang mehr zulässt bzw. die Kontaktiereinheit 7 außer Funktion setzt. Eine unbemerkte Manipulation an der Kontaktiereinheit 7 ist somit bei geschlossenem Kartenleser 1 nicht möglich.

In Fign. 1 bis 3 ist die Chipkarte 2 in den Kartenleser 1 teilweise eingeführt und steht kurz vor den Mitnehmern 16 des Abdeckschiebers 15. Der Kartenleser 1 ist in sich geschlossen, und die Kontaktiereinheit 7 kann nicht unbemerkt manipuliert werden.

Beim weiteren Einführen nimmt die Chipkarte 2 mittels der Mitnehmer 16 den Abdeckschieber 15 in Einführrichtung 3 mit, wodurch die Bodenöffnung 14 der Bohrschutzhaube 5 freigeben wird. Nach einem vorbestimmten Verschiebeweg von z.B. 20 mm nimmt der Abdeckschieber 15 mit seinen Mitnehmervorsprüngen die beiden Kulissenschieber 12 in Einführrichtung 3 mit, wodurch die Kontaktiereinheit 7 in den schräg verlaufenden Kulissenführungen 13 aus ihrer angehobenen in eine abgesenkte Position geführt wird. Dabei wird die Kontaktiereinheit 7 durch die Bodenöffnung 14 hindurch abgesenkt, bis sie spätestens, wenn die Chipkarte 2 am Kartenanschlag 4 anliegt, die Kontaktfelder der Chipkarte 2 für einen Datenaustausch kontaktiert.

Sofern nicht innerhalb einer vorbestimmten Zeit nach dem Absenken der Kontaktiereinheit 7 ein Datenaustausch mit der Chipkarte 2 stattfindet, wird auch dies von der Überwachungseinheit erkannt, die dann keinen Lesevorgang mehr zulässt bzw. die Kontaktiereinheit 7 außer Funktion setzt. Eine unbemerkte Manipulation an der Kontaktiereinheit 7 ist somit auch bei geöffnetem Kartenleser 1 nicht möglich.

Wenn die Chipkarte 2 wieder aus dem Kartenleser 1 herausgezogen wird, werden der Abdeckschieber 15 und die beiden Kulissenschieber 12 durch die Rücksteilfedern wieder in ihre in Fign. 1 bis 3 gezeigte Ausgangslage zurückgeschoben.

## Patentansprüche

1. Kartenleser (1) mit einer Kontaktiereinheit (7) zum Datenaustausch mit einer in den Kartenleser (1) eingeführten Chipkarte (2),
**dadurch gekennzeichnet,**
**dass** die Kontaktiereinheit (7) innerhalb einer Bohrschutzhaube (5) quer zur Kartenbahn einer eingeführten Chipkarte (2) in Absenkführungen (10) verschiebbar geführt ist,
**dass** eine zur Kartenbahn hin offene Bodenöffnung (14) der Bohrschutzhaube (5) mittels eines Bohrschutz-Abdeckschiebers (15) verschließbar ist, der in Karteneinführrichtung (3) verschiebbar geführt ist und von einer eingeführten Chipkarte (2) in Karteneinführrichtung (3) bis zur Freigabe der Bodenöffnung (14) mitgenommen wird,
**dass** die Kontaktiereinheit (7) mit dem Abdeckschieber (15) derart bewegungsgekoppelt ist, dass durch Verschieben des Abdeckschiebers (15) in Karteneinführrichtung (3) die Kontaktiereinheit (7) durch die freigegebene Bodenöffnung (14) hindurch bis auf die Chipkarte (2) abgesenkt wird, und dass die Bohrschutzhaube (5) und der Abdeckschieber (15) vollflächig jeweils mindestens eine durchgehende Leiterbahnstruktur aufweisen, die an eine Überwachungseinrichtung angeschlossen bzw. anschließbar ist.

2. Kartenleser nach Anspruch 1, **dadurch gekennzeichnet, dass** die Kontaktiereinheit (7) mit dem Abdeckschieber (15) mittels eines in Karteneinführrichtung (3) verschiebbar geführten Kulissenschiebers (12) bewegungsgekoppelt ist, der von dem Abdeckschieber (15) in Karteneinführrichtung (3) mitgenommen wird und eine oder mehrere bzgl. der Kartenbahn und den Absenkführungen (10) schräg verlaufende Kulissenführungen (13) aufweist, in die jeweils ein Führungszapfen (9) der Kontaktiereinheit (7) eingreift.

3. Kartenleser nach Anspruch 1 oder 2, **dadurch gekennzeichnet, dass** die Bohrschutzhaube (5) flächendeckend mindestens eine durchgehende Bohrschutz-Leiterbahnstruktur (17) aufweist, die an die Überwachungseinheit angeschlossen bzw. anschließbar ist.

4. Kartenleser nach Anspruch 3, **dadurch gekennzeichnet, dass** die durchgehende Bohrschutz-Leiterbahnstruktur (17) in zwei Kontaktflächen (19) endet, welche einen elektrischen Kontakt mit einer darauf montierten Leiterplatte (6) herstellen.

5. Kartenleser nach einem der vorhergehenden Ansprüche, **dadurch gekennzeichnet, dass** der Abdeckschieber (15) flächendeckend mindestens eine durchgehende Bohrschutz-Leiterbahnstruktur (18) aufweist, die an die Überwachungseinheit angeschlossen bzw. anschließbar ist.

6. Kartenleser nach einem der vorhergehenden Ansprüche, **dadurch gekennzeichnet, dass** eine Deckelöffnung der Bohrschutzhaube (5) durch eine darauf montierte Leiterplatte (6) verschlossen ist.
